# EUROPEAN PATENT SPECIFICATION

(11) **EP 4 490 410 B1**
(45) Date of publication and mention of the grant of the patent: **03.06.2026**
(21) Application number: 23709376.0
(22) Date of filing: 02.03.2023
(51) Int. Cl.: F16B 25/00

(54) **TIMBER CONCRETE COMPOSITE SCREW**
HOLZ-BETON-VERBUNDSCHRAUBE
VIS COMPOSITE BOIS BÉTON

(30) Priority: 09.03.2022 EP 22161068
(43) Date of publication of application: 15.01.2025
(73) Proprietor: Hilti Aktiengesellschaft, 9494 Schaan (LI)
(72) Inventor: SCHNEIDER, Roland, 6824 Schlins (AT)
(74) Representative: Hilti Aktiengesellschaft Corporate Intellectual Property
(86) International application number: PCT/EP2023/055338
(87) International publication number: WO 2023/169925

(56) References cited:
- EP-A2- 2 206 931
- US-A1- 2009 142 161
- US-A1- 2011 097 178
- US-B2- 9 790 979

## Description

The invention relates to a screw according to the preamble of claim 1. Such a screw is intended to be screwed through a timber element into a concrete body for securing the timber element to the concrete body.

A timber concrete composite screw having two axially offset, helically aligned threads is disclosed in EP 1899613 A1. According to EP 1899613 A1, the pitch of the rearward thread is slightly smaller than the pitch of the forward thread, so as to create a clamping force. The document EP 2 206 931 A2 shows another screw of the prior art.

It is an object of the invention to provide a composite screw which provides, at particularly low manufacturing effort, particularly good performance. This object is achieved by a device according to claim 1. Dependent claims refer to preferred embodiments of the invention.

Accordingly, there is provided a screw having a shank, which has a tip end and a rear end, a concrete thread, which is arranged on the shank, and a timber thread, which is arranged on the shank, wherein the concrete thread and the timber thread are helically aligned with one another, and wherein the concrete thread reaches further to the tip end than does the timber thread, characterized in that the timber thread has an engagement zone, which includes at least two one turn, preferably at least 1.5 turns, more preferably at least two turns, of the timber thread, wherein in the engagement zone, the timber thread becomes wider with decreasing distance from the rear end, and the timber thread has a timber thread trailing flank, which faces the rear end, wherein a pitch of the timber thread trailing flank is generally constant in the engagement zone.

There is thus provided a timber concrete composite screw, which is intended to be screwed through a timber element into a concrete body so as to tap into the concrete body and to secure the timber element on the concrete body. The concrete thread and the timber thread are axially offset, wherein the concrete thread is located closer to the tip end than is the timber thread, so that the concrete thread leads when the screw is installed. The concrete thread is intended to tap a mating thread in the timber element as the screw is screwed through the timber element, and to then tap a mating thread in the concrete body as the screw is installed deeper. The timber thread is helically aligned with respect to the concrete thread (i.e. timber thread and concrete thread are generally positioned on a common helix), and therefore, the timber thread follows the concrete thread into the mating thread cut by the concrete thread as the screw is installed deeper.

The timber thread has an engagement zone of significant axial length (in particular including at least one helical turn, preferably at least 1.5 or 2 turns of the timber thread), and in this engagement zone, the timber thread becomes wider with increasing distance from the tip end, i.e. with decreasing distance from the rear end. In other words, there is a thread width increase towards the rear end, wherein in all cases, "width" is determined parallel to the longitudinal axis of the screw and/or of the shank. In particular, a crest width or/and a foot width of the timber thread may increase with decreasing distance from the rear end in the engagement zone. Said width increase towards the rear might entail additional displacement of timber material in the mating thread previously tapped by the concrete thread, leading to particularly efficient wedging and anchoring (e.g. due to contact at both flanks of the timber thread) within the timber element at low effort, also counteracting the formation of gaps, which might be undesired, e.g. in view of humidity ingress. Thus, a particularly well performing screw can be obtained at particularly low effort.

The engagement zone is in particular a middle zone of the timber thread, i.e. it is remote from the thread start and the thread end of the timber thread, and it has significant length, i.e. it includes at least one, 1.5, two, three or four turns of the timber thread.

The timber thread, the concrete thread, the shank and, where applicable, also the head, are preferably steel parts. They can preferably be monolithic, but also, at least partly, separate parts which are tightly connected. The steel could be hardenable carbon steel, but also a stainless/corrosion resistant steel. Carbon steel will often be the preferred solution. However, for example when the timber has to be treated with chemicals, corrosion-resistant steel may have to be used. Under certain environmental conditions (for example proximity to the sea), the use of corrosion-resistant steel may also be required.

Throughout this document - wherever the terms "axially", "longitudinally", "radially" and "circumferentially" are used, they should refer, in particular, to the longitudinal axis of the shank, which coincides with the longitudinal axis of the screw.

Advantageously, in the engagement zone, the timber thread gradually becomes wider with decreasing distance from the rear end. The gradual widening can be useful in view of performance and/or manufacturing. In particular, undesired peak loads can be avoided.

The timber thread has a timber thread trailing flank, which faces the rear end, i.e. which faces rearwards. A pitch of the timber thread trailing flank is generally constant in the engagement zone. Since the pitch of the timber thread trailing flank is generally constant, whereas the width of the timber thread increases towards the rear, the timber thread leading flank (which faces forwards, towards the tip end) forms a helical wedge, which can press the timber element towards the concrete body.

In particular, the pitch of the timber thread trailing flank can be generally the same as the pitch of the concrete thread, which can be advantageous in view of ease of installation, manufacturing and/or performance. "Generally the same", in this context, can in particular include typical manufacturing tolerances, in particular of 2%, 1% or less.

It is particularly preferred that the screw has an internal drive head, i.e. a head with an internal drive. This can allow particularly easy diving-in of the head into the timber element. The internal drive might e.g. be an internal hex drive.

As already mentioned above, the concrete thread is in particular a concrete tapping thread. A ratio of the outer thread diameter of the concrete thread to the pitch of the concrete thread is preferably, between 1 and 2, in particular between 1.2 and 1.6, at least in some regions of the concrete thread. These are typical dimensions for concrete tapping threads.

The invention is explained in greater detail below with reference to preferred exemplary embodiments, which are depicted schematically in the accompanying drawings. Individual features of the exemplary embodiments presented below can be implemented either individually or in any combination within the scope of the present invention.
Figure 1 is a side view of a screw.
Figure 2 is a sectional view of the screw of figure 1, according to A-A in figure 1, wherein the sectional plane includes the longitudinal axis.
Figure 3 is a detail view D according to figure 2.
Figure 4 is a detail view E according to figure 2.
Figure 5 is a detail view F according to figure 2.
Figure 6 is a schematic detail sectional view of the screw within the engagement zone, wherein the sectional plane includes the longitudinal axis.

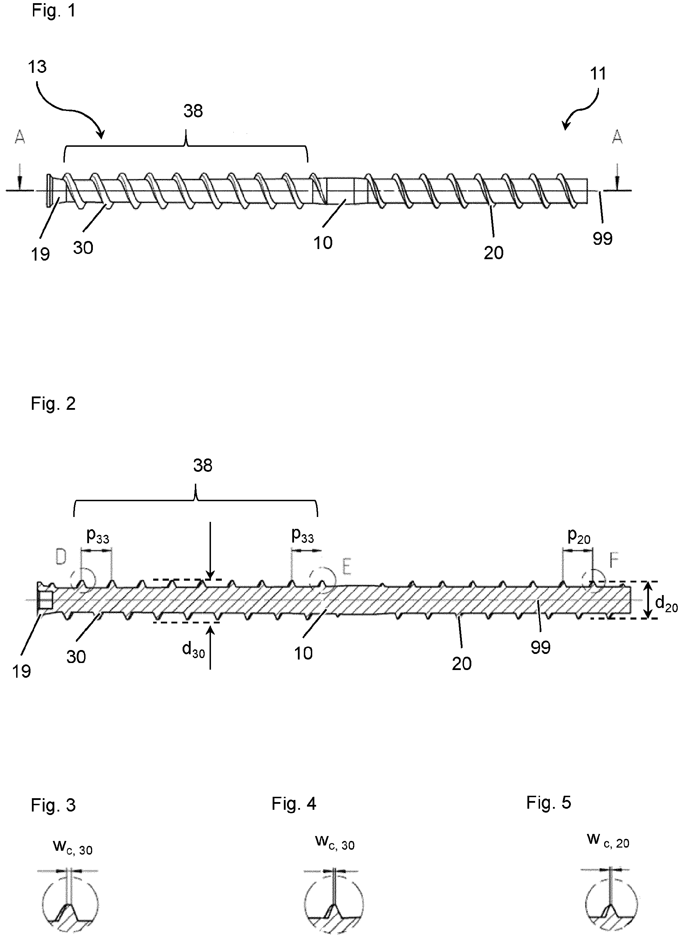

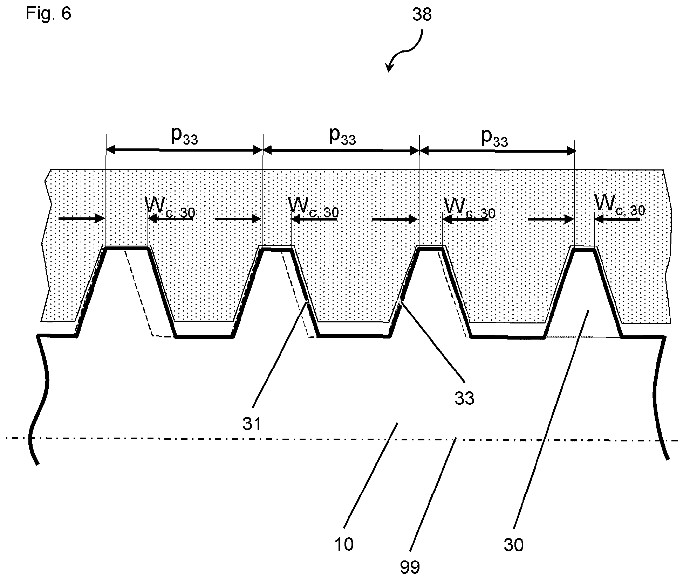

Figures 1 to 6 show an embodiment of a screw. The screw comprises an elongate shank 10, which has a tip end 11 and a rear end 13, wherein the tip end 11 and the rear end 13 are opposite ends of the shank 10. A longitudinal axis 99 of the shank extends through the tip end 11 and through the rear end 13. The tip end 11 is that end which is intended to be inserted first into a substrate when the screw is used as intended.

The screw furthermore comprises a head 19 which is connected to the shank 10 at the rear end 13 thereof. Preferably, the head 19 has an internal drive, e.g. an internal hex drive, a cross drive or others, wherein the internal drive might facilitate the head 19 penetrating a timber substrate.

The screw furthermore comprises a concrete thread 20, which is intended for tapping into concrete, and a timber thread 30, which is intended for screwingly engage a timber element. In the present embodiment, the shank 10, the concrete thread 20 and the timber thread 30 are integral, but they could also be separate, tightly connected, parts. In other embodiments, the screw could also have at least one additional thread.

Both the concrete thread 20 and the timber thread 30 wind around the shank 10. The concrete thread 20 and the timber thread 30 are axially, with respect to the longitudinal axis 99, offset with one another, wherein the concrete thread 20 is located closer to the tip end 11 than is the timber thread 30.

The screw is intended to be screwed through a timber element into a concrete body, so that concrete thread 20 engages the concrete body, and the timber thread 30 engages the timber element, thereby securing the timber element to the concrete body.

The concrete thread 20 is a concrete tapping thread, i.e. it has suitable dimensions and sufficient hardness to form a mating thread in a concrete substrate. The concrete thread has generally constant pitch p₂₀, for example 10mm. A ratio of the outer thread diameter d₂₀ of the concrete thread 20 to the pitch p₂₀ of the concrete thread 20 is between 1 and 2, in particular between 1.2 and 1.6, in most regions of the concrete thread 20.

The concrete thread 20 and the timber thread 30 are generally helically aligned, i.e. they are arranged to follow a common thread helix. Accordingly, when the screw is screwed through the timber element, the concrete thread 20 will form a mating thread within the timber element, and the timber thread 30 will subsequently occupy this mating thread when the screw is installed deeper.

The timber thread 30 has a timber thread leading flank 31, which faces tipwards, i.e. which faces the tip end 11, and a timber thread trailing flank 33, which faces the rear end 13. The timber thread 30 has an engagement zone 38, which spans most of the timber thread 30, except for its thread start and its thread end, and which includes approximately nine turns of the timber thread 30 in the present embodiment. At least within the engagement zone 38, the cross section of the timber thread 30 (measured in sectional planes including the longitudinal axis 99, as visible in figures 2 to 6) is non-constant and increases with increasing distance from the tip end 11 (i.e. with decreasing distance from the rear end 13). In particular, at least within the engagement zone 38, the timber thread 30 becomes continuously wider with increasing distance from the tip end 11 (i.e. with decreasing distance from the rear end 13). More particularly, at least within the engagement zone 38, a crest width w_{c,30} of the timber thread 30 continuously increases with increasing distance from the tip end 11 (i.e. with decreasing distance from the rear end 13), for example from an initial value of 0.3 mm to a final value of 0.7 mm.

The timber thread trailing flank 33 defines a pitch p₃₃, which is generally constant and in particular the same as the pitch p₂₀ of the concrete thread 20.

The concrete thread 20 has a crest width w_{c,20} which is generally constant throughout the concrete thread 20, except possibly the thread start and/or the thread end of the concrete thread. The constant crest width w_{c,20} of the concrete thread 20 is generally the same as an initial crest width w_{c,30} of the timber thread 30, which an initial crest width w_{c,30} of the timber thread 30 is present at a tipward end of the engagement zone 38.

In the present embodiment, the outer thread diameter d₃₀ of the timber thread 30 is generally constant within the engagement zone 38, and generally the same as the outer thread diameter d₂₀ of the concrete thread 20. In other embodiments, the outer thread diameter d₃₀ of the timber thread 30 can be larger than the outer thread diameter d₂₀ of the concrete thread 20. In yet other embodiments, the outer thread diameter d₃₀ of the timber thread 30 can be non-constant within the engagement zone 38. In particular, the outer thread diameter d₃₀ of the timber thread 30 can increase continuously as it approaches the rear end 13, for example starting from d₂₀ to a diameter that is larger than d₂₀ while progressing towards the head 19 and/or towards the rear end 13.

## Claims

1. Screw having a shank (10), which has a tip end (11) and a rear end (13), a concrete thread (20), which is arranged on the shank (10), and a timber thread (30), which is arranged on the shank (10), wherein the concrete thread (20) and the timber thread (30) are helically aligned with one another, and wherein the concrete thread (20) reaches further to the tip end (11) than does the timber thread (30),
**characterized in that**
- the timber thread (30) has an engagement zone (38), which includes at least one turn of the timber thread (30), wherein in the engagement zone (38), the timber thread (30) becomes wider with decreasing distance from the rear end (13), and
- the timber thread (30) has a timber thread trailing flank (33), which faces the rear end (13), wherein a pitch (p₃₃) of the timber thread trailing flank (33) is generally constant in the engagement zone (38).

2. Screw according to claim 1,
**characterized in that**
in the engagement zone (38), the timber thread (30) gradually becomes wider with decreasing distance from the rear end (13).

3. Screw according to any of the preceding claims,
**characterized in that**
the pitch (p₃₃) of the timber thread trailing flank (33) is generally the same as a pitch (p₂₀) of the concrete thread (20).

4. Screw according to any of the preceding claims,
**characterized in that**
the screw has an internal drive head (19).

5. Screw according to any of the proceeding claims,
**characterized in that**
a ratio of an outer thread diameter (d₂₀) of the concrete thread (20) to the pitch (p₂₀) of the concrete thread (20) is between 1 and 2, in particular between 1.2 and 1.6, at least in some regions of the concrete thread (20).

## Patentansprüche

1. Schraube, die einen Schaft (10), der ein Spitzenende (11) und ein hinteres Ende (13) aufweist, ein Betongewinde (20), das an dem Schaft (10) angeordnet ist, und ein Holzgewinde (30), das an dem Schaft (10) angeordnet ist, aufweist, wobei das Betongewinde (20) und das Holzgewinde (30) spiralförmig miteinander ausgerichtet sind und wobei das Betongewinde (20) weiter als das Holzgewinde (30) zu dem Spitzenende (11) reicht,
**dadurch gekennzeichnet, dass**
- das Holzgewinde (30) eine Eingriffszone (38) aufweist, die mindestens eine Windung des Holzgewindes (30) einschließt, wobei das Holzgewinde (30) in der Eingriffszone (38) mit abnehmendem Abstand von dem hinteren Ende (13) breiter wird, und
- das Holzgewinde (30) eine Holzgewindenachlaufflanke (33) aufweist, die dem hinteren Ende (13) zugewandt ist, wobei eine Steigung (p₃₃) der Holzgewindenachlaufflanke (33) in der Eingriffszone (38) generell konstant ist.

2. Schraube nach Anspruch 1,
**dadurch gekennzeichnet, dass**
das Holzgewinde (30) in der Eingriffszone (38) mit abnehmendem Abstand von dem hinteren Ende (13) allmählich breiter wird.

3. Schraube nach einem der vorstehenden Ansprüche,
**dadurch gekennzeichnet, dass**
die Steigung (p₃₃) der Holzgewindenachlaufflanke (33) generell dieselbe wie eine Steigung (p₂₀) des Betongewindes (20) ist.

4. Schraube nach einem der vorstehenden Ansprüche,
**dadurch gekennzeichnet, dass**
die Schraube einen inneren Antriebskopf (19) aufweist.

5. Schraube nach einem der vorstehenden Ansprüche,
**dadurch gekennzeichnet, dass**
ein Verhältnis eines Außengewindedurchmessers (d₂₀) des Betongewindes (20) zu der Steigung (p₂₀) des Betongewindes (20) mindestens in einigen Regionen des Betongewindes (20) zwischen 1 und 2, insbesondere zwischen 1,2 und 1,6 ist.

## Revendications

1. Vis ayant une tige (10), qui a une extrémité de pointe (11) et une extrémité arrière (13), un filetage de béton (20), qui est agencé sur la tige (10), et un filetage de bois (30), qui est agencé sur la tige (10), dans laquelle le filetage de béton (20) et le filetage de bois (30) sont alignés de manière hélicoïdale l'un sur l'autre, et dans laquelle le filetage de béton (20) atteint plus loin l'extrémité de pointe (11) que le filetage de bois (30),
**caractérisée en ce que**
- le filetage de bois (30) a une zone de mise en prise (38), qui comporte au moins un tour du filetage de bois (30), dans laquelle dans la zone de mise en prise (38), le filetage de bois (30) devient plus large à mesure que la distance de l'extrémité arrière (13) diminue, et
- le filetage de bois (30) a un flanc arrière de filetage de bois (33), qui fait face à l'extrémité arrière (13), dans laquelle un pas (P₃₃) du flanc arrière de filetage de bois (33) est généralement constant dans la zone de mise en prise (38).

2. Vis selon la revendication 1,
**caractérisée en ce que**
dans la zone de mise en prise (38), le fil de bois (30) s'élargit progressivement à mesure que la distance de défroissement se défroisse par rapport à l'extrémité arrière (13).

3. Vis selon l'une quelconque des revendications précédentes,
**caractérisée en ce que**
le pas (P₃₃) du flanc arrière de filetage de bois (33) est généralement le même que le pas (P₂₀) du filetage de béton (20).

4. Vis selon l'une quelconque des revendications précédentes,
**caractérisée en ce que**
la vis a une tête d'entraînement interne (19).

5. Vis selon l'une quelconque des revendications précédentes,
**caractérisée en ce que**
un rapport d'un diamètre de filetage externe (d₂₀) du filetage de béton (20) au pas (P₂₀) du filetage de béton (20) est compris entre 1 et 2, en particulier entre 1,2 et 1,6, au moins dans certaines régions du filetage de béton (20).
